# EUROPÄISCHE PATENTSCHRIFT

(11) **EP 1 979 096 B1**
(45) Veröffentlichungstag und Bekanntmachung des Hinweises auf die Patenterteilung: **01.05.2013**
(21) Anmeldenummer: 07711368.6
(22) Anmeldetag: 22.01.2007
(51) Int. Cl.: B01L 3/00, B01D 21/26, B01J 19/00, C12M 1/26, G01N 1/28, G01N 15/04, G01N 35/00

(54) **MIKROFLUIDISCHE ANORDNUNG UND MODULARES LAB-ON-A-CHIP-SYSTEM**
MICROFLUIDIC ARRANGEMENT AND MODULAR LAB-ON-A-CHIP SYSTEM
SYSTEME MICROFLUIDIQUE ET SYSTEME MODULAIRE DE "LABORATOIRE SUR PUCE"

(30) Priorität: 24.01.2006 DE 102006003532
(43) Veröffentlichungstag der Anmeldung: 15.10.2008
(73) Patentinhaber: INSTITUT FÜR MIKROTECHNIK MAINZ GmbH, 55129 Mainz (DE)
(72) Erfinder: DADIC, Dalibor, 61462 Königstein (DE); VON GERMAR, Frithjof, 55126 Mainz (DE); DRESE, Klaus-Stefan, 55130 Mainz (DE); DOFFING, Frank, 56288 Kastellaun (DE); KREMPEL, Christiane, 65199 Wiesbaden (DE); MEHIETANG, Jean-Michel, 93055 Regensburg (DE); GRANSEE, Rainer, 55129 Mainz (DE)
(74) Vertreter: Kampfenkel, Klaus
(86) Internationale Anmeldenummer: PCT/EP2007/000505
(87) Internationale Veröffentlichungsnummer: WO 2007/085395

(56) Entgegenhaltungen:
- EP-A- 1 464 398
- WO-A-00/71243
- WO-A-03/035229
- WO-A-2005/093388
- US-A1- 2004 121 449
- US-A1- 2005 026 301

## Beschreibung

Die Erfindung betrifft eine mikrofluidische Anordnung zum Trennen von Stoffgemischen durch Zentrifugalkräfte sowie eine Betreibereinrichtung zum Betreiben der mikrofluidischen Anordnung.

Um die zum Beispiel in einem biochemischen oder medizinischen Labor durchzuführenden Analyse- und Diagnoseprozesse weitestgehend automatisieren zu können, kommen sogenannte Lab-On-A-Chip-Systeme zum Einsatz, bei denen Proben im Mikroliterbereich oder kleiner verarbeitet werden können. Deshalb wird ein solches System oft auch als mikrofluidisches System bezeichnet.

Bei diesen Lab-On-A-Chip-Systemen werden die normalerweise in einem Labor durchzuführenden Verfahrensschritte auf einen oder mehreren Kunststoffchips oder Kunststoffplättchen durchgeführt. Derartige Kunststoffchips weisen unter anderem mikrofluidische Kanäle, Reaktionskammern, Mischerstrukturen und funktionalisierte Oberflächen auf. Diese Lab-On-A-Chip-Systeme werden mit Hilfe von entsprechenden Betreibergeräten, welche die Aktuatorik und eventuell Chemikalienvorräte enthalten, betrieben.

Bei zahlreichen Prozessen ist es jedoch erforderlich, zur Analyse von Substanzen Stoffgemische in Fraktionen unterschiedlicher Dichte aufzutrennen. Beispielsweise ist es für medizinische Untersuchungen häufig erforderlich, Blut in rote Blutzellen und in Plasma aufzutrennen.

Lab-on-a-Chipsysteme weisen nur stationär angeordnete Einrichtungen und mikrofluidische Chips auf, so dass eine Auftrennung von Stoffgemischen über Zentrifugalkräfte in derartigen Systemen bisher nicht möglich ist.

Aus dem Aufsatz "Bio-Disk, eine vielseitige, zentrifugale, mikrofluidische Plattform für die Point-of-Care-Diagnostik" von Dr. Jens Ducrée et al., J. Chem. Eng. Technol., 2005, 28, Seiten 613-616, ist eine rotierbare Bio-Disk bekannt, bei der die Zentrifugalkraft ausgenutzt wird, um Proben innerhalb der Bio-Disk zu bewegen und zu mischen. Ein Nachteil derartiger Bio-Disks ist darin zu sehen, dass auf ihr sämtliche Fluidkanäle, Reaktionsräume und weitere Funktionalitäten enthalten sind. Da die Zentrifugalkraft zudem als Antrieb benutzt wird, ist es nicht möglich, an derartige Bio-Disks weitere Chipmodule anzubinden. Ein Einsatz in einem Lab-on-a-Chipsystem ist somit nicht möglich.

Weiterhin ist aus der WO 2004/061413 A2 ein Verfahren sowie eine Vorrichtung zum Trennen von Partikeln in einer mikrofluidischen Einrichtung beschrieben. Die mikrofluidische Einrichtung kann ein mikrofluidischer Chip sein, welcher eine Aufnahmekammer aufweist, in die eine zu trennende Probe eingeführt werden kann. Weiterhin ist eine Trennkammer in dem mikrofluidischen Chip integriert, in der die Bestandteile eines zu trennenden Stoffgemisches getrennt werden können. Beispielsweise ist der mikrofluidische Chip geeignet, Blut in Plasma und rote Blutzellen zu trennen, wobei das Plasma aus der Trennkammer in eine Aufnahmekammer entweichen kann. Dem Dokument sind keine Hinweise zu entnehmen, wie eine solche mikrofluidische Einrichtung zur automatisierten Auftrennung von Stoffgemischen in ein Lab-on-a-Chipsystem integriert werden kann.

Aus der WO 03/035229 ist eine Mikrostruktur aus einer Chipeinrichtung bekannt, mit der eine Testprobe bearbeitet werden kann. Über ein Rohr oder eine Leitung kann ein getrenntes Modul mit der Chipeinrichtung verbunden werden. In dem getrennten Modul kann eine Vorbearbeitung oder Vorbereitung der Testprobe erfolgen.

Der vorliegenden Erfindung liegt die Aufgabe zugrunde, eine mikrofluidische Anordnung zu schaffen, mit der in Abhängigkeit von der zu untersuchenden Stoffgemischprobe eine optimale Auftrennung erreicht werden kann und die in ein Lab-on-a-Chipsystem zur automatischen Befüllung, Entleerung und Auftrennung von Stoffgemischen eingesetzt werden kann.

Ein weiterer Gesichtspunkt der Erfindung ist darin zu sehen, ein Lab-On-A-Chip-System derart weiter zu entwickeln, dass in einem solchen System Stoffgemische automatisch aufgetrennt werden können.

Ein Kerngedanke der Erfindung ist darin zu sehen, einen rotierbaren, vorzugsweise aus Polymer hergestellten mikrofluidischen Chip herzustellen, der ausschließlich zur Trennung von Stoffgemischen durch Zentrifugalkräfte ausgebildet ist. Weiterhin ist ein vom rotierbaren Chip getrennter Statorchip vorgesehen, über den der rotierbare Chip vorzugsweise automatisch befüllt und entleert werden kann.

Ein weiterer Kerngedanke der Erfindung ist darin zu sehen, dass der Statorchip die Kopplungsstelle zu anderen Funktionsmodulen eines modularen Lab-On-A-Chip-Systems bildet.

Das oben genannte technische Problem wird zum einen durch die Merkmale des Anspruchs 1 gelöst.

Danach ist eine mikrofluidische Anordnung zum Trennen von Stoffgemischen durch Zentrifugalkräfte vorgesehen. Die mikrofluidische Anordnung weist einen in Drehbewegung versetzbaren Rotorchip, welcher wenigstens einen mikrofluidischen Kanal, wenigstens eine mikrofluidische Trennkammer und wenigstens eine erste, mit dem mikrofluidischen Kanal verbundene Öffnung zum Befüllen und/oder Entleeren des Rotorchips enthält, auf. Weiterhin ist ein Statorchip vorgesehen, der wenigstens einen mikrofluidischen Kanal und wenigstens eine erste Öffnung aufweist, wobei der Rotorchip über die Öffnungen zum Befüllen und/oder Entleeren fluidisch mit dem Statorchip verbindbar ist. **Eine Kopplungseinrichtung dient zum Herstellen und Lösen einer fluidischen Verbindung zwischen dem Rotorchip und dem Statorchip. Die Kopplungseinrichtung (60) ist zum Heranführen des Rotorchips an einen Statorchip ausgebildet, um zwischen dem Rotorchip und dem Statorchip eine fluidische Verbindung herzustellen, derart, dass das Befüllen und/oder Entleeren des Rotorchips über den Statorchip erfolgt. Die Kopplungaeinrichtung ist auch zum Lösen der fluidischen Vebindung ausgebildet, so dass der Rotorchip in Drehbewegung versetzbar ist.**

Der Statorchip kann weitere Elemente aufweisen, wie zum Beispiel mikrofluidische Kanäle, Reaktionskammern und/oder Mikromischer, so dass eine Prozessabfolge mit der mikrofluidischen Anordnung durchgeführt werden kann.

Mit der mikrofluidischen Anordnung ist es insbesondere möglich, aus Lebensmittelproben das Protein Gluten zu extrahieren. Hierzu müssen ungelöste Probenbestandteile abgetrennt werden. Das Probenvolumen kann bei ca 500µl liegen, in denen 50mg der Lebensmittelprobe suspendiert sind.

Vorteilhafte Weiterentwicklungen sind Gegenstand der Unteransprüche.

Zunächst sei erwähnt, dass unter "Stoffgemisch" insbesondere eine Mischung, Emulsion und/oder Dispersion aus flüssigen, gasförmigen und/oder festen Stoffen, wie z. B. Blut (Plasma, Blutkörperchen), oder Partikel mit einer funktionalisierten Oberfläche in einer Flüssigkeit zu verstehen ist.

Mit dem Begriff "Entleeren" wird die Entnahme zumindest eines Teils des Stoffgemisches, beispielsweise die Entnahme einzelner oder mehrerer getrennter Fraktionen des Stoffgemisches nach dem Zentrifugieren verstanden.

Weiterhin sei angemerkt, dass der Begriff "Statorchip" dahingehend zu verstehen ist, dass der Statorchip im Betrieb der mikrofluidischen Anordnung nicht bewegt wird und somit als definierter Ankopplungspunkt für andere Funktionsmodule, Versorgungs- und/oder Aktuatorikanschlüsse eines Lab-On-A-Chip-Systems dienen kann. Ein solches modulares Lab-on-a-Chipsystem ist zum Beispiel aus der Veröffentlichung "Automated chip-based device for simple and fast nucleic acid amplification", Münchow, G.; Dadic, D. et al. in Expert Rev. Mol. Diagn. 5(4), 2005, S. 613ff bekannt.

Der Ausdruck "mikrofluidisch" weist insbesondere daraufhin, dass Probenmengen im Mikroliterbereich von der Anordnung verarbeitet werden können. Dank des besonderen Aufbaus der mikrofluidischen Anordnung können jedoch auch Probenmengen bis in den Milliliterbereich verarbeitet werden.

Der Ausdruck "Chip" bezeichnet beispielsweise ein rechteck- oder scheibenförmiges Plättchen, welches eine Fläche von beispielsweise 4 bis 25 qcm und eine Dicke von etwa 1 bis 10mm aufweisen kann.

Zweckmäßigerweise sind sowohl der Rotorchip als auch der Statorchip als Einwegchip, welche Polymermaterial enthalten können, herstellbar. Vorzugsweise werden die Einwegchips mit einem kostengünstigen Massenherstellungsverfahren, wie z. B. Spritzguss, Heißprägen oder Reaktionsgießen, hergestellt.

Wenn die mikrofluidischen Kanäle und/oder Trennkammern im Rotorchip in definierter Weise dimensioniert sind, kann die mikrofluidische Anordnung auch zum Abmessen von zu bearbeitenden Stoffgemischen verwendet werden; denn in diesem Fall kann der Rotorchip mit einer definierten, vorbestimmten Stoffgemischmenge befüllt werden.

Mit dem erfindungsgemäßen Rotorchip ist es möglich, Stoffgemischmengen vorzugsweise bis zu 1 ml zu verarbeiten.

Weisen der Rotor- und der Statorchip zudem zweite Öffnungen auf, ist es möglich, den Rotorchip über die ersten Öffnungen zu befüllen und den Rotorchip über die zweiten Öffnungen zu entleeren. Während des Betriebes ist hierbei lediglich darauf zu achten, dass der Rotor zum Befüllen mit geeigneten Mitteln und/oder Strukturen in einer ersten Stellung gehalten wird, so dass die ersten Öffnungen des Rotors mit den ersten Öffnungen des Statorchips fluchten, und dass zum Entleeren des Rotorchips der Rotorchip ebenso mit geeigneten Mitteln und/oder Strukturen in einer zweiten Stellung gehalten wird, so dass die zweiten Öffnungen des **Rotorchips** mit den zweiten Öffnungen des Statorchips fluchten. Die geeigneten Mittel und/oder Strukturen können beispielsweise jeweils komplementäre Strukturen auf Rotor- und Statorchip sein, wie etwa Pins oder Erhebungen auf der Statorchipoberfläche, die beim fluidischen Verbinden der Chips in passende Ausnehmungen im Rotorchip eingreifen. Die Mittel und / oder Strukturen können derart angeordnet sein, dass Rotor- und Statorchip jeweils nur in einer ersten und einer zweiten Stellung zum Befüllen und Entleeren miteinander gekoppelt werden. In einer erfindungsgemäßen Ausführungsform können erste und zweite Stellung auch identisch sein.

Um Bestandteile oder Fraktionen der zu analysierenden Probe, welche eine höhere Dichte als andere Bestandteile besitzen, von den übrigen Bestandteilen besser trennen zu können, kann der Rotorchip auch mindestens eine mikrofluidische Trennkammer aufweisen, die vorzugsweise in Form mehrerer, in etwa fingerförmig angeordneter, vom mikrofluidischen Kanal ausgehender, vom Drehpunkt gesehen radial nach Außen gerichteter einzelner Kanäle ausgebildet ist. Die einzelnen, die mikrofluidische Trennkammer bildenden Kanäle, haben vorzugsweise einen wesentlich kleineren Kanalquerschnitt als der mikrofluidische Kanal und einen größeren Abstand vom Drehpunkt als der mikrofluidische Kanal. Auf diese Weise wird ein Ausspülen oder ein Aufwirbeln der in der Trennkammer gesammelten Bestandteile der Probe bei der Entleerung des Rotorchips noch weitergehender verhindert.

Um auch meist unerwünschte Bestandteile der Probe mit geringer Dichte, wie beispielsweise Gas oder Luft, von der Probe abtrennen zu können, gehen vom mikrofluidische Kanal in wenigstens einem Bereich in Richtung zum Drehpunkt strahlenförmig angeordnete Kanäle oder auch Kammern aus. Diese innen liegenden Kanäle oder Kammern haben im Wesentlichen einen geringeren Abstand vom Drehpunkt als der mikrofluidische Kanal. Diese Kanäle und / oder Kammern können bei der Zentrifugation beispielsweise, das beim Befüllen des Rotorchips in den Trennkammern verbleibende Gas aufnehmen

Durch die Ausgestaltung und Dimensionierung der außen liegenden mikrofluidischen Trennkammern, der innen liegenden Kanäle und- / oder Kammern und des mikrofluidischen Kanals kann der Rotorchip in einfacher Art und Weise an die jeweilige Trennaufgabe angepasst werden.

Der Rotorchip kann mit Drehzahlen zwischen einigen hundert Umdrehungen bis zu etwa hunderttausend Umdrehungen pro Minute betrieben werden. Insbesondere bei derart hohen Drehzahlen ist darauf zu achten, dass Unwuchten vermieden werden. Dies wird vorzugsweise durch einen quadratischen oder kreisförmigen Rotorchip erreicht, bei dem der Drehpunkt in der Mitte des Rotorchips liegt und der wenigstens eine mikrofluidische Kanal und gegebenenfalls die Trennkammern und die innenliegenden Kanäle und / oder Kammern rotationssymmetrisch um den Drehpunkt angeordnet sind. Ein bevorzugter Drehzahlbereich reicht von etwa 1000 Umdrehungen bis zu etwa 50000 Umdrehungen pro Minute.

Gemäß einer vorteilhaften Weiterbildung kann der Rotorchip zwei mikrofluidische Kanäle aufweisen, die in einem vorbestimmten Bereich durch eine für Flüssigkeiten und/oder Gase durchlässige Wand miteinander verbunden sind. Hierzu kann eine entsprechend poröse oder mikrostrukturierte Wand verwendet werden. Hierbei ist der eine Kanal näher zum Drehpunkt angeordnet als der andere Kanal. Dieser Rotorchip mit einer für Flüssigkeiten und/oder Gase durchlässigen Wand ermöglicht beispielsweise die Trennung eines Stoffgemischs, bei der benetzte Partikel in einer benetzenden Flüssigkeit vorhanden sind und von dieser getrennt werden sollen. Die für Flüssigkeiten und/oder Gase durchlässige Wand sorgt dafür, dass bei Rotation des Rotorchips die benetzende Flüssigkeit in den mikrofluidischen Kanal, der den größeren Abstand zum Drehpunkt des Rotorchips aufweist, entweichen kann, da die Partikel den fluiddurchlässigen Bereich der Wand nicht passieren können. Der innere mikrofluidische Kanal fungiert in diesem Fall als mikrofluidische Trennkammer.

Angemerkt sei jedoch, dass im Sinne der Erfindung eine mikrofluidische Trennkammer und die innen liegenden Kanäle und / oder Trennkammern sowohl den weiterzuverarbeitenden Probenanteil oder den nicht weiterzuverarbeitenden Probenanteil nach der Zentrifugation enthalten kann.

Um das Entleeren des mikrofluidischen Kanals zu verbessern, kann der wenigstens eine mikrofluidische Kanal des Rotorchips mit einem weiteren mikrofluidischen Kanal verbunden sein, über den zum Entleeren des wenigstens einen mikrofluidischen Kanals ein Über- oder Unterdruck angelegt werden kann.

Der Statorchip weist beispielsweise dritte Öffnungen auf, an die eine Aktuatorik und/oder wenigstens eine Pumpe zum Befüllen und Entleeren des Rotorchips oder zum Anlegen eines Über- oder Unterdrucks an den Rotorchip ankoppelbar sind. Die dritten Öffnungen können sich beispielsweise an einer Stirnfläche des Statorchips befinden und mit einem der mikrofluidischen Kanäle verbunden sein.

Die ersten, zweiten und/oder dritten Öffnungen im Statorchip sind mit wenigstens einem mikrofluidischen Kanal verbunden, über die zu bearbeitende Stoffgemische zum Rotorchip geführt und aus diesem wieder entnommen werden können.

Die zu zentrifugierenden Stoffgemische weisen vorzugsweise Stoffe unterschiedlicher Dichte auf.

Um den Rotorchip in eine Drehbewegung versetzen zu können, ist eine Antriebseinrichtung vorgesehen.

Die Antriebseinrichtung, die Kopplungseinrichtung, der Rotorchip und der Statorchip können Bestandteil einer Baugruppe oder eines Funktionsmoduls sein. Hierzu weist die mikrofluidische Anordnung beispielsweise einen Rahmen auf, in dem die Antriebseinrichtung federnd, vorzugsweise in vertikaler Richtung, gelagert ist.

Der Statorchip kann am Rahmen befestigt sein und beispielsweise eine Öffnung zum Durchführen der Antriebsachse der Antriebseinrichtung aufweisen. Der Rotorchip ist, sofern es sich um eine vertikale Anordnung handelt, oberhalb des Statorchips angeordnet und weist ebenfalls in der Mitte eine Öffnung auf, durch die die Antriebsachse hindurch geführt ist. Die Antriebsachse weist ein Halteelement zum Halten des Rotorchips auf, wobei im Rotationsbetrieb der Rotorchip im Abstand zum Statorchip angeordnet ist, um frei drehbar gelagert sein zu können.

Die Form der Öffnung in dem Rotorchip und die Ausgestaltung des Halteelements können derart aufeinander abgestimmt sein, dass der Rotorchip nur in einer vordefinierten Stellung bezüglich des statorchips gehalten werden kann. Auf diese Weise können fest definierte Befüll- und Entleerungspositionen des Rotorchips bezüglich des Statorchips erreicht werden, ohne dass eine weitere Justierung des Rotorchips bezüglich des Statorchips erfolgen muss. Auch die Kopplungseinrichtung kann am Rahmen befestigt sein und weist eine Einrichtung zum Heranführen des Rotorchips im Ruhezustand an den Statorchip auf, um zwischen dem Rotorchip und dem Statorchip eine fluidische Verbindung zum Befüllen und Entleeren des Rotorchips herzustellen.

An dieser Stelle sei erwähnt, dass die Öffnungen im Rotorchip und im Statorchip zum Befüllen und Entleeren des Rotorchips mit Standarddichtungen, wie z. B. Flachdichtungen oder O-Ringen, abgedichtet sein können.

Das oben genannte technische Problem wird ebenfalls mit den Merkmalen des Anspruchs 13 gelöst.

Danach ist eine Betreibereinrichtung zum Betreiben einer mikrofluidische Anordnung nach einem der Ansprüche 1 bis 12 vorgesehen. Die Betreibereinrichtung weist eine Antriebseinrichtung zum Antreiben des Rotorchips, und eine Kopplungseinrichtung zum Herstellen und Lösen einer fluidischen Verbindung zwischen dem **Rotorchip** und dem Statorchip auf. Die Kopplungseinrichtung (60) ist zum Heranführen des **Rotorchips** an einen **Statorchip** ausgebildet, um zwischen dem Rotorchip und dem Statorchip eine fluidische Verbindung herzustellen, derart, dass das Befüllen und/oder Entleeren des Rotorchips über den...

Vorteilhafterweise umfasst die Betreibereinrichtung eine erste Halteeinrichtung, in der die Antriebseinrichtung federnd gelagert ist.

Weiterhin kann eine zweite Halteeinrichtung zur Aufnahme des Statorchips vorgesehen sein, wobei der der Rotorchip oberhalb oder unterhalb des Statorchips angeordnet ist. Die Antriebseinrichtung weist eine Antriebsachse auf, die den Rotorchip halten kann, wobei im Rotationsbetrieb der Rotorchip im Abstand zum Statorchip angeordnet ist. Die Kopplungseinrichtung kann eine Einrichtung aufweisen, die den Rotorchips im Ruhezustand an den Statorchip heranführt, um zwischen dem Rotorchip und dem Statorchip eine fluidische Verbindung zum Befüllen und Entleeren des Rotorchips herzustellen. Nach dem Befüllen oder Entleeren sorgt die Kopplungseinrichtung dafür, dass ein ausreichender Abstand zwischen dem Rotorchip und dem Statorchip hergestellt wird, um eine freie Rotation des Rotorchips zu ermöglichen.

Vorteilhafterweise kann die Betreibereinrichtung Vorratsbehälter zum Aufbewahren von Rotorchips, Statorchips und/oder zu verwendende Chemikalien sowie eine Einrichtung zum automatisierten Zuführen und Entfernen eines Rotor- und/oder Statorchips zur bzw. von der Betreibereinrichtung aufweisen.

An dieser Stelle sei erwähnt, dass die in einem Rotorchip und in einem Statorchip gebildeten mikrofluidischen Kanäle und Trennkammern als Nuten und Ausnehmungen im Chip ausgebildet sein können und mit einer Folie abgedeckt sind, so dass ein allseitig geschlossener Kanalraum entsteht. Lediglich über Öffnungen im Chip, sowohl in der Deckelfolie als auch im Chipkörper, können Proben eingeführt oder entnommen werden. Die bevorzugte Anordnung der Rotor- und Statorchips im Betrieb erfolgt mit den Chipkörpern zueinander.

Die Erfindung wird nachfolgend anhand einiger Ausführungsbeispiele in Verbindung mit den beiliegenden Zeichnungen näher erläutert. Es zeigen:
- Fig. 1: eine perspektivische Darstellung einer mikrofluidischen Anordnung zum Trennen von Stoffgemischen und die dazugehörende Betreibereinrichtung,
- Fig. 2: die in Fig. 1 gezeigte Anordnung mit einer montierten Kopplungseinrichtung,
- Fig. 3: eine Seitenansicht der in Fig. 2 dargestellten Anordnung teilweise im Schnitt,
- Fig. 4: die in Fig. 2 dargestellte Kopplungseinrichtung in einer ersten Position, bei der eine Befüllung oder Entleerung des Rotorchips über den Statorchip erfolgen kann,
- Fig. 5: die in Fig. 2 dargestellte Kopplungseinrichtung in einer zweiten Position, bei der sich der Rotorchip frei drehen kann,
- Fig. 6: ein erstes Ausführungsbeispiel eines Rotorchips,
- Fig. 7: ein weiteres Ausführungsbeispiel eines Rotorchips,
- Fig. 8: ein weiteres Ausführungsbeispiel eines Rotorchips,
- Fig. 9: ein weiteres Ausführungsbeispiel eines Rotorchips,
- Fig. 10: ein Ausführungsbeispiel eines Statorchips,
- Fig. 11: ein weiteres Ausführungsbeispiel eines Statorchips, und
- Fig. 12: ein weiteres Ausführungsbeispiel eines Rotorchips.

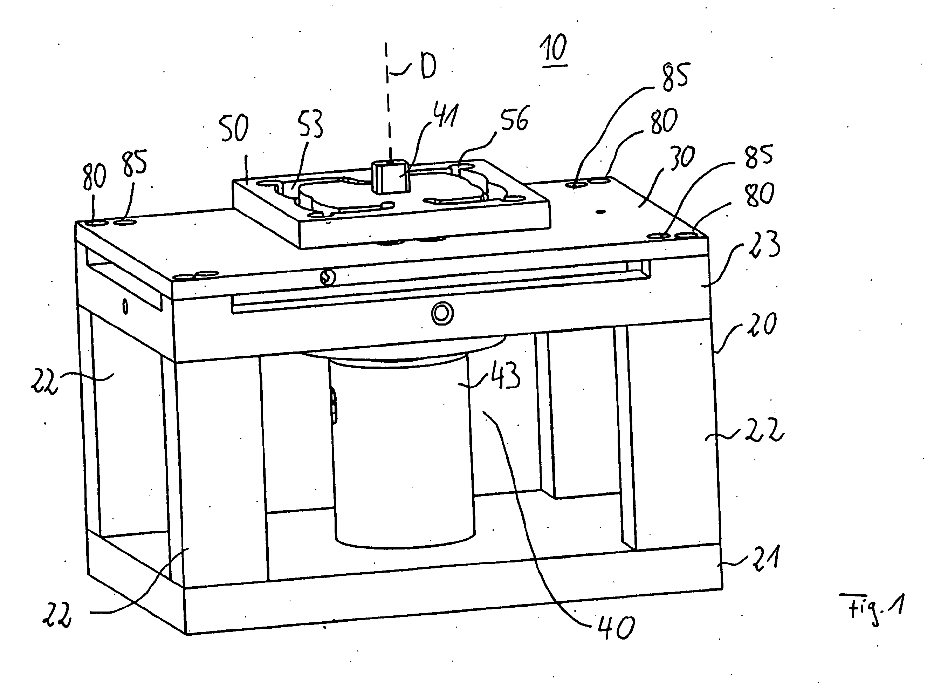

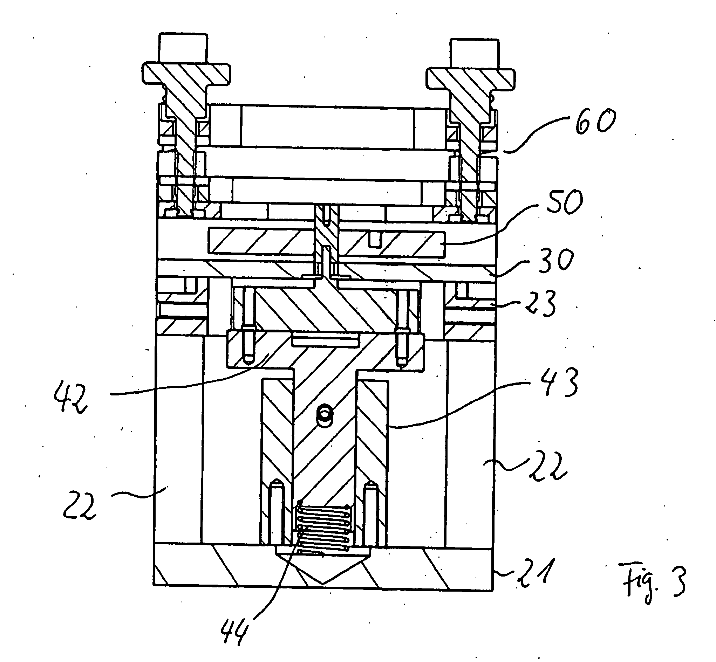

In Fig. 1 ist eine beispielhafte mikrofluidische Anordnung 10 zum Trennen von Stoffgemischen durch Zentrifugalkräfte, nachfolgend auch kurz Zentrifugenmodul genannt, dargestellt. Das Zentrifugenmodul 10 weist beispielsweise einen Rahmen 20 auf. Der Rahmen 20 umfasst eine Bodenplatte 21, wobei in jeder Ecke der Bodenplatte ein Pfosten 22 angeordnet ist. Die Pfosten 22 tragen eine Halteeinrichtung 23, die im vorliegenden Beispiel zum Halten eines Statorchips 30 und einer Antriebseinrichtung 40 ausgebildet ist. Die Antriebseinrichtung kann im Zentrum des Rahmens 20 angeordnet sein. Die Antriebseinrichtung 40 enthält beispielsweise einen von einer Hülse 43 umgebenen Elektromotor 42, der eine Antriebsachse aufweist, von der in Fig. 1 lediglich der obere Abschnitt dargestellt ist. Der Motor 42 ist in Fig. 3 dargestellt.

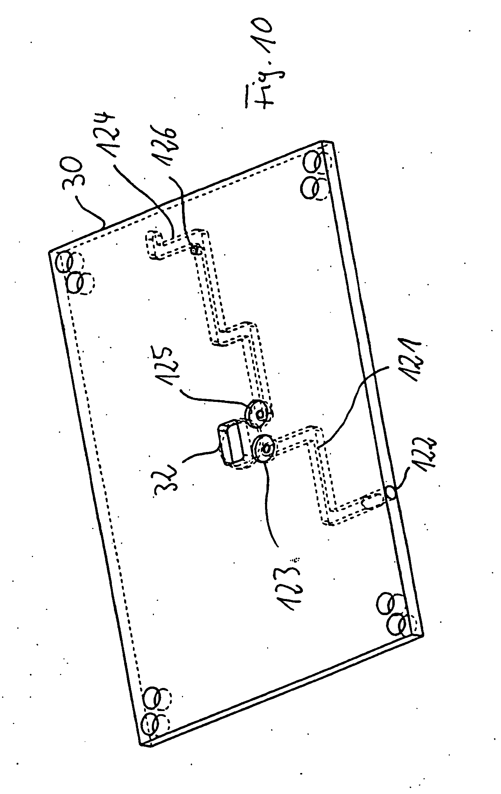

Der obere Abschnitt ist als Halteelement 41 zum Halten eines Rotorchips 50 ausgebildet. Das Halteelement 41 weist gegenüber der Antriebsachse einen größeren Querschnitt auf. Die Antriebsachse führt durch eine Öffnung, die sich im Zentrum des Statorchips 30 befindet. Eine solche Öffnung ist beispielsweise in Fig. 10 mit Bezugszeichen 32 dargestellt. Die Öffnung 32 ist derart dimensioniert, dass das Halteelement 41 durch die Öffnung 32 geführt werden und dass sich die Antriebsachse darin frei drehen kann.

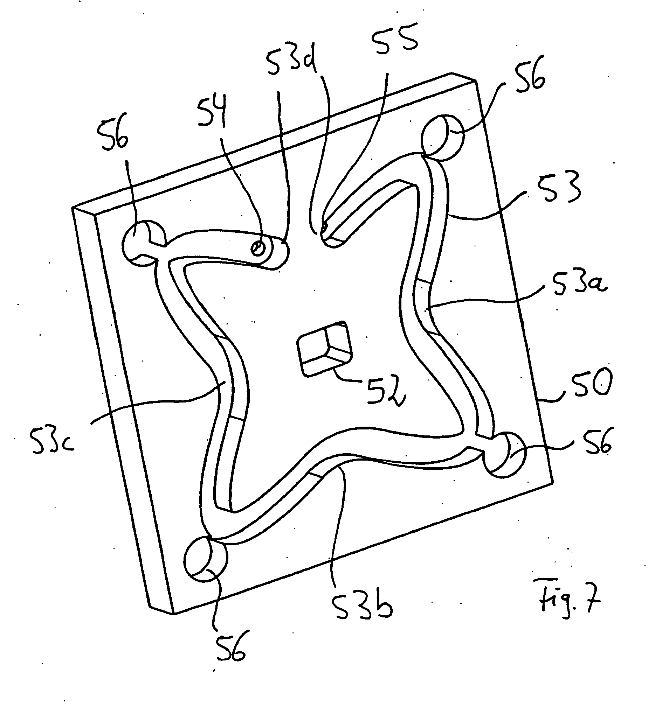

Der Rotorchip 50 weist in der Mitte beispielsweise eine im Wesentlichen rechteckförmige 52 Öffnung auf, in die das ebenfalls rechteckförmige Halteelement 41 der Antriebsachse eingeführt ist. Die Form des Halteelementes 41 und die Form der Öffnung 52 im Rotorchip 50 sind derart ausgebildet, dass der Rotorchip 50 nur in einer vorbestimmten Ausrichtung auf das Halteelement 41 aufgesetzt werden kann. Hierdurch wird sichergestellt, dass der Rotorchip 50 in einer Position gegenüber dem Statorchip 30 gehalten wird, in der der Rotorchips 50 ordnungsgemäß befüllt und entleert werden kann. Weiterhin sind in dem Rotorchip 50 ein mikrofluidischer Kanal 53, vier Trennkammern 56 und zwei Öffnungen 54 und 55 vorgesehen, die in Fig. 7 vergrößert dargestellt sind.

Das in Fig. 1 gezeigte Zentrifugenmodul 10 ist vertikal ausgerichtet, so dass der Rotorchip 50, wie dargestellt oberhalb des Statorchips 30 gehalten wird. Der Rotorchip 50 kann alternativ auch unterhalb des Statorchips 30 angeordnet sein. Bei der vertikalen Anordnung des Zentrifugenmoduls 10 dreht sich der Rotorchip 50 in der horizontalen Ebene. Das Zentrifugenmodul 10 kann auch um 90° gedreht aufgestellt werden, so dass der Rotorchip 50 in der vertikalen Ebene gedreht werden kann. In diesem Fall wäre der Rotorchip 50 rechts oder alternativ links vom **Statorchip** 30 angeordnet. Der Statorchip 30 kann beispielsweise mit vier Schrauben an der Halteeinrichtung 22 lösbar befestigt sein. Die Schrauben können durch vier im Statorchip 50 ausgebildete Löcher 85 hindurch gesteckt werden.

An dieser Stelle sei darauf hingewiesen, dass der Rotorchip 50 und der Statorchip 30, wie dargestellt, als rechteckförmige Plättchen aus Polymer hergestellt sein können. Denkbar ist auch, den Rotorchip 50 und/oder den Statorchip 30 als kreisförmige Plättchen auszubilden. Die Kantenlänge eines rechteckförmigen Rotorchips kann beispielsweise zwei bis drei Zentimeter betragen, während die Kantenlänge eines rechteckförmigen Statorchips beispielsweise zwischen drei und vier Zentimeter liegen kann. Die Dicke der Chips beträgt beispielsweise ein bis zwei Millimeter.

Damit der Rotorchip 50 zum Befüllen und Entleeren gegen den Statorchip 30 gedrückt werden und während des Trennprozesses frei und schwingungsfrei drehen kann, ist der Motor 42 und somit auch die Antriebsachse bezüglich der Längsachse der Antriebseinrichtung 40 federnd gelagert.

Fig. 3 zeigt, dass in der Hülse 43 eine Feder 44 eingesetzt, auf der der Motor 42 aufliegt. In Fig. 3 sind weiterhin die Bodenplatte 21, die beiden äußeren Pfosten 22 sowie im Schnitt die Halteeinrichtung 23 dargestellt, an die der Statorchip 30 beispielsweise festgeschraubt ist. Durch die Feder 44 kann der Rotorchip 50 zusammen mit dem Elektromotor 42 angehoben oder abgesenkt werden.

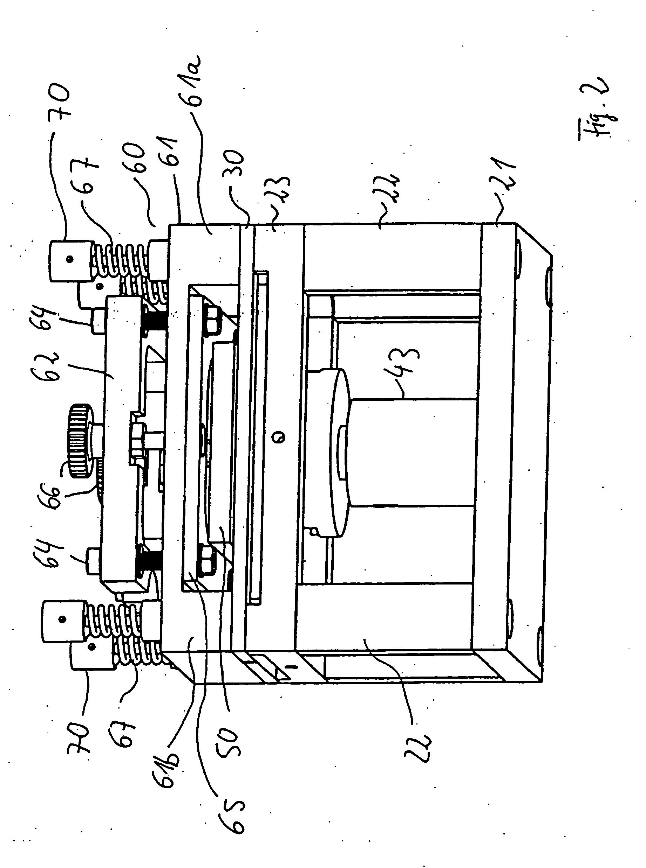

Zum Befüllen oder Entleeren des Rotorchips muss eine fluidische Verbindung zwischen dem Rotorchip 50 und dem Statorchip 30 hergestellt werden können. Hierzu ist eine in den Fig. 2, 4 und 5 dargestellte Kopplungseinrichtung 60 vorgesehen, die ebenfalls an der Halteeinrichtung 23 lösbar befestigt werden kann. Die Kopplungseinrichtung 60 sitzt beispielsweise auf dem Statorchip 30 auf. Mittels vier Schrauben 70, die durch Öffnungen 80 im Statorchip 50 durchgeführt werden, kann die Kopplungseinrichtung 60 an der Halteeinrichtung 23 befestigt werden.

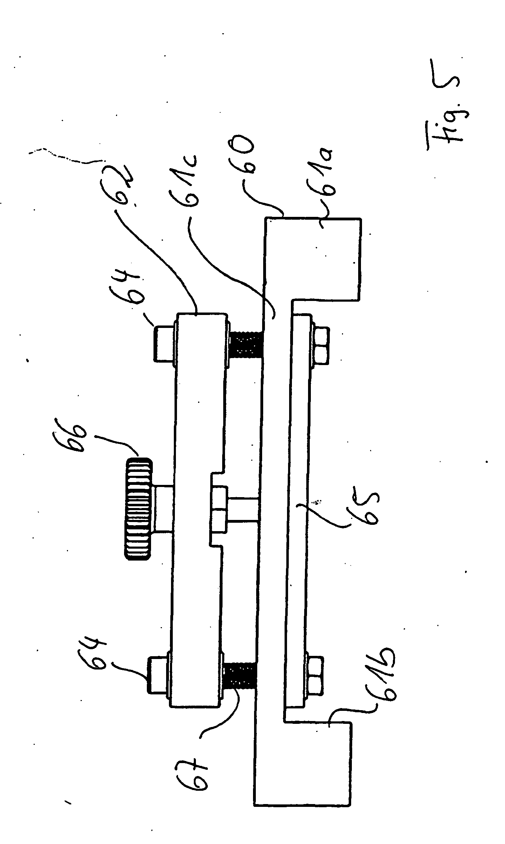

Ferner weist die Kopplungseinrichtung 60 eine Einrichtung 65 auf, die den Rotorchip 50 zum Statorchip hin und vom Statorchip weg bewegen kann. Die Einrichtung 65 ist beispielsweise als Druckplatte 65 ausgebildet, die wiederum mit einer Gegenplatte 62 verbunden ist. Druckplatte 65 und Gegenplatte 62 werden zum Beispiel über vier Druckfedern 67 in einem vorbestimmten Abstand zueinander gehalten. Die Druckfedern werden von Schrauben 64 geführt, die durch entsprechende Bohrungen in der Druckplatte 65 und der Gegenplatte 63 verlaufen. Die Kopplungseinrichtung 60 weist ferner eine Halteeinrichtung 61 auf, die die Gegenplatte 62 und die Druckplatte 65 höhenverstellbar abstützt. Die Halteeinrichtung 61 enthält beispielsweise zwei gegenüberliegende Randabschnitte 61a und 61b, über die die Kopplungseinrichtung mit dem Rahmen 20 verbunden ist. Die beiden Randabschnitte 61a und 61b sind durch zwei parallel verlaufende Schenkel 61c verbunden. Die Schenkel 61c sind zwischen der Gegenplatte 62 und der Druckplatte 65 angeordnet und dienen für die Druckplatte 65 als Anlagefläche, wie dies in Fig. 5 näher dargestellt ist. Die Gegenplatte 62 und die Druckplatte 65 können manuell über zwei Rändelschrauben 66 in der Höhe verstellt werden.
Die Druckfedern 67 bewirken, dass der Rotorchip 50 mit definierter Kraft an den Statorchip 30 angedrückt werden kann.

Wie in Fig. 2 und 3 gezeigt, befindet sich die Druckplatte 65 in der obersten Position, in der sie an den Schenkeln 61c anliegt. In dieser Position der Druckplatte 65 kann sich der Rotorchip 50 frei drehen, da die Feder 44 den Motor 42 und den Rotorchip von dem Statorchip 30 weg drücken kann.

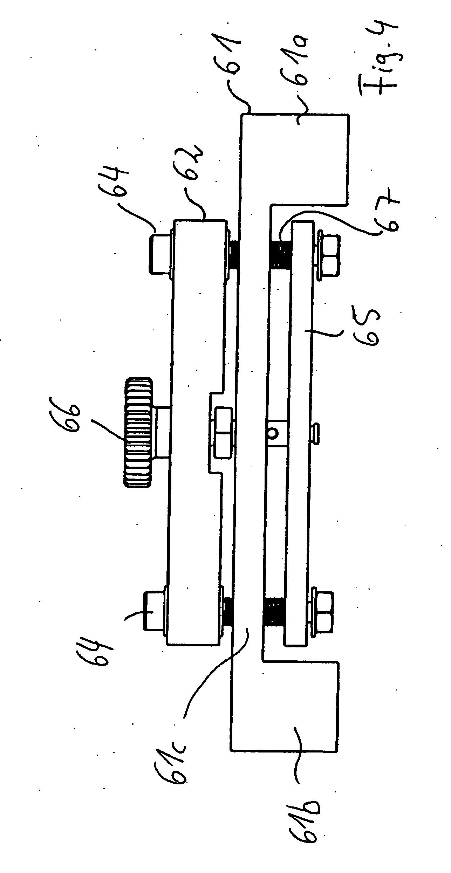

Fig. 4 zeigt die Kopplungseinrichtung 60, bei der die Druckplatte 65 in eine untere Position bewegt worden ist. Der nicht mehr rotierende Rotorchip 50 wird nunmehr an den Statorchip 30 angedrückt, so dass sich eine fluidische Verbindung zwischen dem Rotorchip 50 und dem Statorchip 30 bildet.

Obwohl die in den Fig. 2, 3, 4 und 5 dargestellte Kopplungseinrichtung 60 als manuell betätigbare Einrichtung dargestellt ist, ist es denkbar, eine elektrisch oder pneumatisch gesteuerte Kopplungseinrichtung zum automatisierten Bewegen eines Rotorchips bezüglich eines Statorchips vorzusehen.

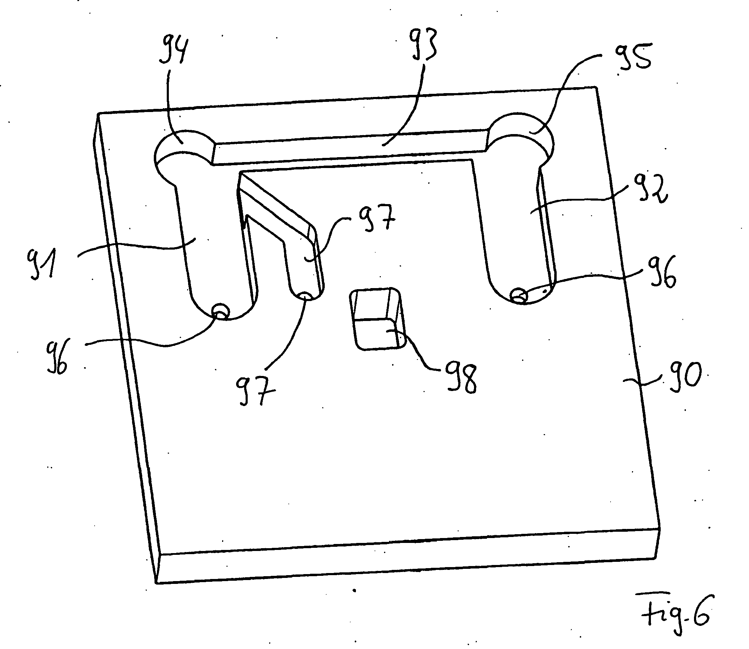

In Fig. 6 ist ein beispielhafter Rotorchip 90 zum Einsatz in dem Zentrifugenmodul 10 dargestellt. Der Rotorchip 90 weist im Zentrum eine Öffnung 98 zur Aufnahme des Haltelements 41 der Antriebsachse auf. Die Öffnung 98 legt somit den Drehpunkt des **Rotorchips** 90 fest. In dem Rotorchip 90 ist ein mikrofluidischer Kanal ausgenommen, der zwei parallel verlaufende, längliche Abschnitte 91 und 92 aufweist, die an einem Ende mit einem quer verlaufenden Kanal 93 verbunden sind. In den beiden Verbindungsbereichen des Querkanals 93 und den Kanalabschnitten 91 und 92 ist jeweils eine Ausnehmung vorgesehen, die als Trennkammern 94 und 95 fungieren können. Der mikrofluidische Kanal verläuft derart, dass die Trennkammern 94 und 95 einen möglichst großen Abstand zum Drehpunkt des Rotorchips 90 aufweisen. Dadurch wird sichergestellt, dass sich während der Rotation des Rotorchips 90 getrennte dichtere Bestandteile in den Trennkammern 94 und 95 ansammeln, so dass eine Aufwirbelung bei der Entnahme des Überstandes verringert werden kann. Der nutzbare Überstand verbleibt im mikrofluidischen Kanal. Die länglichen Kanalabschnitte 91 und 92 weisen Endabschnitte mit jeweils einer Öffnung 96, die näher als der übrige mikrofluidische Kanal am Drehpunkt des Rotorchips 90 liegen. Damit wird sichergestellt, dass während der Drehung des Rotorchips 90 infolge der auftretenden Zentifugalkräfte keine Probe aus den Öffnungen 96 entweichen kann. Die Öffnungen 96 dienen als Einlass oder Auslass für eine Probe. Vom mikrofluidischen Kanal 91 erstreckt sich ein Kanalarm 97, der zum Drehpunkt des Rotorchips 90 hin verläuft und für die Entnahme des Überstandes eines getrennten Stoffgemisches dient. Bei Verwendung des Rotorchips 90 ist darauf zu achten, dass ein Statorchip verwendet wird, dessen Öffnungen mit den Öffnungen 96 und 97 des Rotorchips 90 zur Deckung gebracht werden können, um den Rotorchip über den Statorchip befüllen und entleeren zu können.

In Fig. 7 ist der in Fig. 1 dargestellte Rotorchip 50 detaillierter dargestellt. In der Oberfläche des Rotorchips 50 ist ein etwa sternförmig verlaufender, mikrofluidischer Kanal 53 mit zwei Öffnungen 54 und 55 in der Nähe des Drehpunktes des Rotorchips 50 eingebracht. Der Drehpunkt wird durch die Öffnung 52 definiert, in der das Halteelement 41 der Antriebseinrichtung 40 aufgenommen werden kann. Durch die Öffnungen 54 und 55 kann der Rotorchip 50 mit einer Probe befüllt und anschließend der Überstand entnommen werden. Der mikrofluidische Kanal 53 weist vier wellenförmige Abschnitte auf, wobei der mittlere Bereich 53a, 53b, 53c und 53d jedes Abschnitts den kürzesten Abstand zur Öffnung 52 aufweist, während die äußeren, in den jeweiligen Ecken des Rotorchips liegende Kanalbereiche einen möglichst großen Abstand zum Drehpunkt des **Rotorchips** 50 aufweisen. Die vier Kanalbereiche, die den größten Abstand zur Öffnung 52 aufweisen, münden jeweils in eine Trennkammer 56. Damit ist sichergestellt, dass das während der Rotation des Rotorchips 50 entstehende Zentrifugat in den kreisförmigen Trennkammern 56 gesammelt wird. Die gewählte mikrofluidische Kanalform sorgt dafür, dass der gesamte, sich im mikrofluidischen Kanal 53 befindliche Überstand einer Probe entnommen werden kann. Einen zusätzlichen Kanalbereich, wie er in Fig. 6 zur Entnahme des Überstandes erforderlich ist, benötigt die in Fig. 7 dargestellte Anordnung nicht.

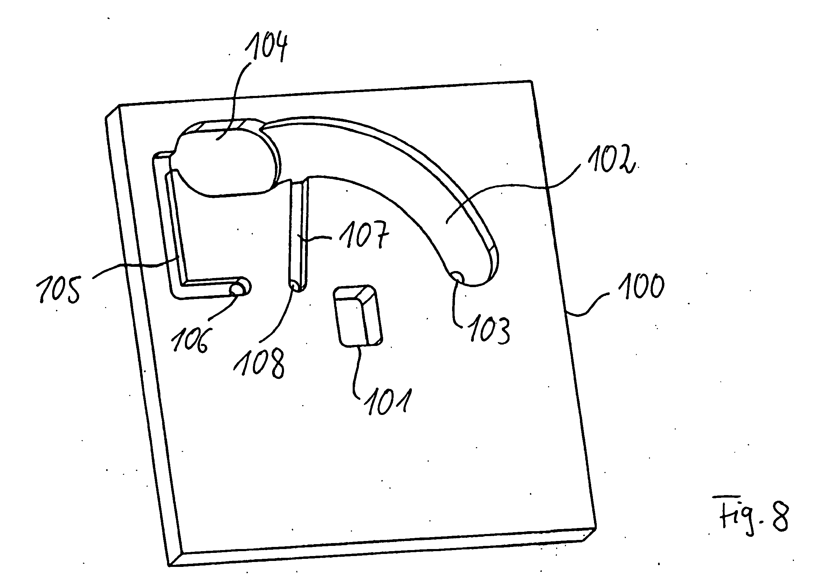

In Fig. 8 ist ein weiteres Ausführungsbeispiel eines in das Zentrifugenmodul 10 einsetzbaren Rotorchips dargestellt. Wiederum ist in der Mitte des Rotorchips 100 eine Öffnung 101 zur Aufnahme des Halteelements 41 der Antriebseinrichtung 40 vorgesehen. Die Öffnung 101 bildet wiederum den Drehpunkt des Rotorchips 100. Der Rotorchip 100 weist einen gebogenen Kanalabschnitt 102 auf, dessen Abstand zur Öffnung 101 und somit zum Drehpunkt des Rotorchips 100 wächst. An dem der Öffnung am nächsten liegenden Endbereich des Kanalabschnittes 102 ist eine Öffnung 103 zur Entnahme eines Überstandes vorgesehen. Am äußeren Ende des Kanalabschnitts 102 ist eine Trennkammer 104 vorgesehen, in der sich während der Drehung des Rotorchips 100 überwiegend das Zentrifugat ansammelt, da die Trennkammer 104 bezüglich des Drehpunktes des Rotorchips 100 einen möglichst großen Abstand aufweist. Von der Trennkammer 104 führt ein beispielsweise L-förmiger Kanalabschnitt 105 zur Öffnung 101 hin. Der Kanalabschnitt 105 weist am äußeren Ende, das den geringsten Abstand zum Drehpunkt des Rotorchips 100 besitzt, eine Öffnung 106 zum Befüllen des Rotorchips 100 auf. Im vorliegenden Beispiel ist die Breite des Kanalabschnitts 102, in dem sich der Überstand ansammeln kann, deutlich breiter als der Kanalabschnitt 105, der zum Befüllen des **Rotorchips** 100 dient. In den Kanalabschnitt 102 mündet ein Kanalarm 107, der zum Drehpunkt des Rotorchips 100 verläuft. Am äußeren Ende des Kanalarms 107 ist eine Öffnung 108 vorgesehen, über die ein Druckmittel zur Entladung eines Überstandes im Kanalabschnitt 102 angelegt werden kann.

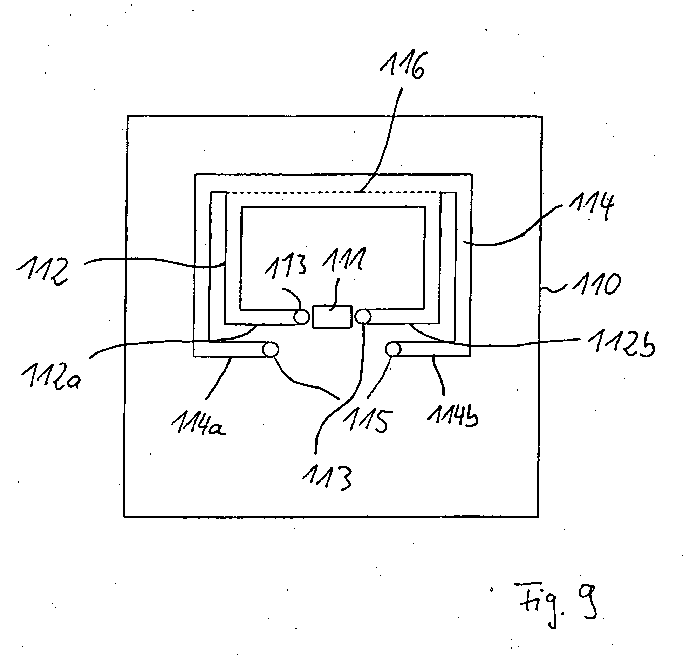

In Fig. 9 ist eine weitere Ausführungsform eines Rotorchips dargestellt. Der Rotorchip 110 weist wiederum in der Mitte eine Öffnung 111 auf, die zur Aufnahme des Halteelementes 41 der Antriebsachse und somit als Drehpunkt des Rotorchips dient. In dem Rotorchip 110 ist ein innen liegender, im wesentlichen rechteckförmiger, mikrofluidischer Kanal 112 angeordnet, der zwei Endabschnitte 112a und 112b aufweist, in denen Öffnungen 113 vorgesehen sind. Die Öffnungen 113 befinden sich beispielsweise in unmittelbarer Nähe der Öffnung 111. Um den mikrofluidischen Kanal 112 herum befindet sich ein zweiter, vorzugsweise rechteckförmiger, mikrofluidischer Kanal 114, der einen größeren Abstand zur Öffnung 111 und somit zur Drehachse des Rotorchips 110 aufweist. Der äußere mikrofluidische Kanal enthält zwei Endabschnitte 114a und 114b, die jeweils eine Öffnung 115 in der Nähe der Öffnung 111 aufweisen. Der außen liegende mikrofluidische Kanal 114 und der innen liegende mikrofluidische Kanal 112 weisen eine gemeinsame fluiddurchlässige, zum Beispiel eine mikrostrukturierte Wand 116 auf, durch die die beiden Kanäle miteinander verbunden sind. Mit Hilfe des Rotorchips 110 können beispielsweise benetzte Partikel, z. B. mit DNA behaftete Partikel, bei der Aufreinigung von DNA von der benetzenden Flüssigkeit getrennt werden. Beispielsweise wird eine Probe über einen entsprechend ausgebildeten Statorchip in die Öffnung 113 des innen liegenden, mikrofluidischen Kanals 112 eingegeben. Während des Trennprozesses wird infolge der auftretenden zentrifugalen Kräfte und der Partikelgröße die benetzende Flüssigkeit aus dem inneren Kanal 112 durch die poröse Wand 116 in den außen liegenden mikrofluidischen Kanal 114 entweichen. Über die Öffnungen 115 kann die Flüssigkeit dann mit Hilfe eines entsprechend ausgebildeten Statorchips entnommen werden. Die benetzten Partikel bleiben in dem inneren Kanal 112 zurück und können nunmehr getrocknet werden. Auf diese Weise ist es möglich, das Zentrifugenmodul 10 auch als Trockner einzusetzen.

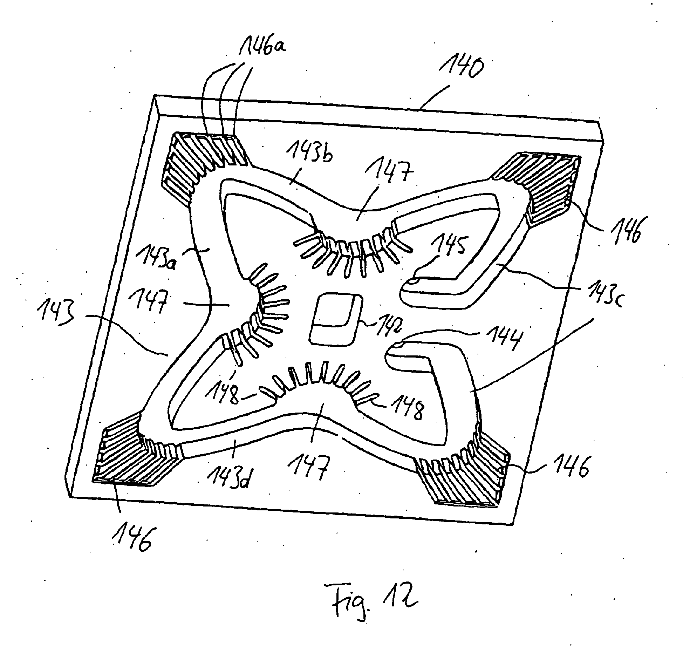

In Fig. 12 ist ein weiterer beispielhafter Rotorchip 140 dargestellt, dessen mikrofluidischer Kanal ähnlich dem mikrofluidischen Kanal des in Fig. 7 dargestellten Rotorchips 50 ausgebildet ist. In der Oberfläche des Rotorchips 140 ist ein etwa sternförmig verlaufender, mikrofluidischer Kanal 143 mit zwei Öffnungen 144 und 145 in der Nähe des Drehpunktes des Rotorchips 140 eingebracht. Der Drehpunkt wird durch eine Öffnung 142 definiert, in der das Halteelement 41 der Antriebseinrichtung 40 aufgenommen werden kann. Durch die Öffnungen 144 und 145 kann der Rotorchip 140 mit einer Probe befüllt und anschließend die im mikrofluidischen Kanal enthaltenen Bestandteile der Probe entnommen werden. Der mikrofluidische Kanal 143 weist vier wellenförmige Abschnitte 143a, 143b, 143c und 143d auf, wobei der mittlere Bereich 147 jedes Abschnitts den kürzesten Abstand zur Öffnung 142 hat, während die äußeren, in den jeweiligen Ecken des Rotorchips 140 liegende Kanalbereiche einen möglichst großen Abstand zum Drehpunkt des Rotorchips 140 aufweisen. Der Abschnitt 143c ist im mittleren Bereich aufgetrennt, wobei in dem einen Abschnittsende die Öffnung 144 und in dem anderen Abschnittsende die Öffnung 145 vorgesehen ist. Die beiden Abschnittsenden weisen vorzugsweise zur Öffnung 142, d. h. zum Drehpunkt des Rotorchips 140 hin.

In einer beispielhaften Ausführungsform mündet jeder der vier äußeren Kanalbereiche, die den größten Abstand zur Öffnung 142 aufweisen, jeweils in eine fingerförmige Trennkammer 146, deren einzelne fingerförmige Kammern 146a sich strahlenförmig radial nach außen, d. h. zum Rand des Rotorchips 140 hin erstrecken. Damit ist sichergestellt, dass während der Rotation des Rotorchips 50 Fraktionen der zu analysierenden Probe mit höherer Dichte in den fingerförmigen Trennkammern 146 gesammelt werden. Die fingerförmigen Trennkammern 146 verbessern die Abtrennung der im mikrofluidischen Kanal enthaltenen Fraktion von der Fraktion höherer Dichte und verhindern bei der Entleerung des Rotorchips ein erneutes Ausspülen und Vermiscchen der dichteren Fraktion mit der zu gewinnenden Fraktion.

Die mittleren Bereiche 147 der drei wellenförmigen Abschnitte 143a, 143b und 143d münden jeweils in mehrere nach innen gerichtete, vorzugsweise längliche Kammern oder Kanäle 148. Denkbar wäre auch, dass die mittleren Bereiche 147 jeweils nur in eine einzige Kammer 148 münden. Ferner ist denkbar, dass nur ein mittlerer Bereich 147 in einen oder mehrere Kammern 148 mündet. Die mittleren Bereiche 147 weisen zum Drehpunkt des Rotorchips 140 gerichtete Wölbungen auf, von denen sich die Kammern 148 strahlenförmig radial nach innen erstrecken. Radial nach innen bedeutet, dass die Kammern 148 innerhalb des vom mikrofluidischen Kanal 143 eingeschlossenen Bereichs liegen. Diese Kammern 148 nehmen Fraktionen mit niedriger Dichte bei der Zentrifugation auf. Durch die Ausgestaltung und Dimensionierung der außen liegenden fingerförmigen Trennkammern 146 und der innen liegenden Kammern oder Kanäle 148 kann der Rotorchip 140 in einfacher Weise an die jeweilige Trennaufgabe angepasst werden.

In Fig. 10 ist eine Ausführungsform des Statorchips 30 dargestellt. In dem Statorchip 30 ist ein erster mikrofluidischer Kanal 121 vorgesehen, der an einer Stirnseite des Statorchips 120 beginnt und dort eine Öffnung 122 aufweist. An die Öffnung 122 kann eine Aktuatoreinrichtung angeschlossen werden, um einen Rotorchip mit einer Probe befüllen zu können. Am anderen Ende des mikrofluidischen Kanals 121 ist in der Nähe der Öffnung 32 eine Öffnung 123 vorgesehen, die mit einer entsprechenden Öffnung in einem Rotorchip, beispielsweise dem Rotorchip 50, zum Fluchten gebracht werden kann, wenn der Rotorchip beispielsweise befüllt werden soll. Der Statorchip 30 weist einen weiteren mikrofluidischen Kanal 124 auf, dessen eine Ende in der Nähe der Öffnung 32 liegt und eine Öffnung 125 aufweist. Eine weitere Öffnung 126 kann am gegenüber liegenden Ende des Kanals 124, das weiter von der Öffnung 32 entfernt ist, angeordnet sein. Über den Kanal 124 kann beispielsweise der Überstand aus einem entsprechend ausgebildeten Rotorchip entnommen werden. Hierzu ist die Öffnung 126 beispielsweise mit einer Pumpe verbindbar.

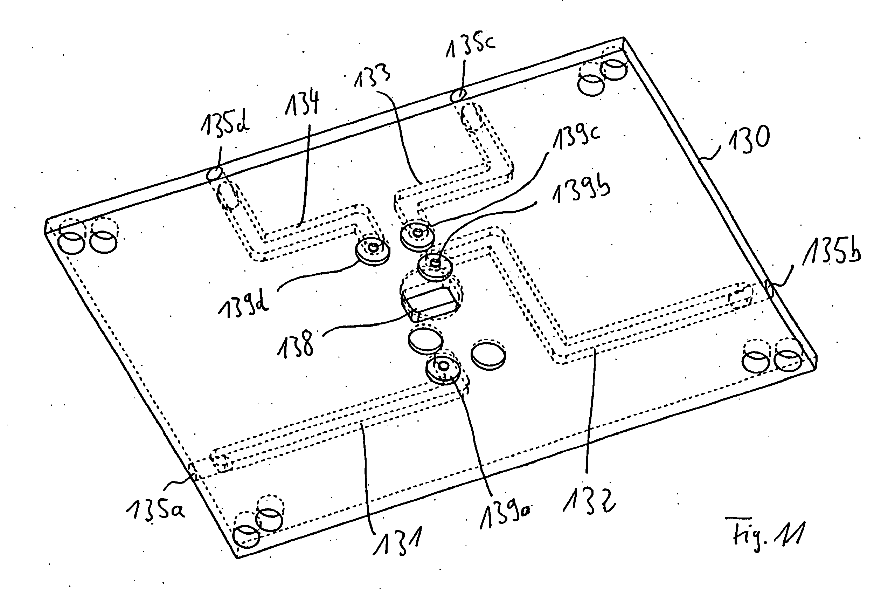

Fig. 11 zeigt eine weitere Ausführungsform eines Statorchips, der beispielsweise vier separate mikrofluidische Kanäle 131 bis 134 aufweist. Jeder mikrofluidische Kanal weist einen Endabschnitt auf, der mit einer Öffnung 135a, 135b, 135c bzw. 135d verbunden ist. Darüber hinaus weist jeder mikrofluidische Kanal einen in der Nähe einer in der Mitte des Statorchips angebrachten Öffnung 138 auf, welche wiederum mit einer Öffnung 139a, 139b, 139c bzw. 139d verbunden sind. Die Öffnungen 139a bis 139d korrespondieren mit entsprechenden Öffnungen in einem Rotorchip, um den Rotorchip befüllen und entleeren zu können. An die Öffnungen 135a bis 135d können zum Beispiel Pumpen, Aktuatoreinrichtungen und/oder Verbindungselemente angeschlossen werden. Verbindungslemente dienen zum Beispiel dazu, das in Fig. 1 gezeigte Zentrifugenmodul 10 an ein weiteres Funktionsmodul eines Lab-o-a-Chipsystem anzuschließen.

Die in den Fig. 10 und 11 gezeigten Statorchips zeichnen sich dadurch aus, dass die mikrofluidischen Kanäle in der Nähe des Zentrums des Statorchips Öffnungen aufweisen und sich dann nach außen zum Randbereich erstrecken. Damit ist sichergestellt, dass Öffnungen, die zum Befüllen und Entleeren eines Rotorchips verwendet werden, in der Nähe des Drehpunktes eines Rotorchips angeordnet werden können.

An dieser Stelle sei erwähnt, dass die in Fig. 1 gezeigte Antriebseinrichtung 40 und die in Fig. 4 und 5 gezeigte Kopplungseinrichtung 60 Bestandteile einer separaten Betreibereinrichtung sein können, die als unabhängiges Funktionsmodul eines Lab-On-A-Chip-System fungieren kann. Innerhalb des nicht dargestellten Lab-On-A-Chip-Systems oder der Betreibereinirchtung können Vorratsbehälter zur Aufnahme von Statorchips, Rotorchips und/oder zu verwendender Chemikalien vorgesehen sein. Weiterhin kann eine Zuführungseinrichtung vorgesehen sein, die dafür sorgt, dass Statorchips und Rotorchips automatisiert einer Betreibereinrichtung zugeführt werden, die beispielsweise eine Halteeinrichtung zum Halten eines Statorchips und einer Antriebseinrichtung aufweist, die einen Rotorchip hält und in Drehbewegung versetzen kann.

Nachfolgend wird die Funktionsweise des in den Fig. 1 und 2 dargestellten Zentrifugenmoduls 10 näher erläutert.

Zu Erläuterungszwecken sei angenommen, dass der im Zentrifugenmodul 10 verwendete Rotor dem in Fig. 7 dargestellten Rotorchip 50 entspricht, während der Statorchip 30 im Wesentlichen dem in Fig. 10 dargestellten Statorchip entspricht. In diesem Zusammenhang denke man sich lediglich die Öffnungen 123 und 125 im **Statorchip** 30 nach Fig. 10 in einem derartigen Abstand von der Öffnung 32 entfernt, dass sie mit den Öffnungen 54 und 55 des **Rotorchips** 50 in Verbindung gebracht werden können.

Weiterhin sei angenommen, dass an die Öffnung 122 des Statorchips eine Aktuatoreinrichtung vorgesehen ist, so dass die eine Probe über den mikrofluidischen Kanal 121, die Öffnung 123, die Öffnung 55 in den mikrofluidischen Kanal 53 des Rotorchips 50 eingeführt werden kann. Weiterhin sei angenommen, dass die Öffnung 126 des Statorchips 120 mit einer Pumpe (nicht dargestellt) verbunden ist, um den Überstand aus dem mikrofluidischen Kanal 53 des Rotors 50 entnehmen zu können.

Es sei nunmehr angenommen, dass sich der Rotor 50 im Ruhezustand befindet und die Druckplatte 65 durch Betätigung der Rändelschrauben 66 in Richtung zur Bodenplatte 21 bewegt wird, so dass in der Endposition der Rotorchip 50 an den **Statorchip** 30 angedrückt wird, wodurch eine fluidische Verbindung über die Öffnung 123 im Statorchip 30 und über die Öffnung 55 im Rotorchip 50 hergestellt wird. Nunmehr wird ein zu zentrifugierendes Stoffgemisch in einer nicht dargestellte Aktuatoreinrichtung durch die Öffnung 122, den mikrofluidischen Kanal 121, die Öffnung 123, die Öffnung 55 des **Rotorchips** 50 in den mikrofluidischen Kanal 53 eingeführt. Wenn der Rotorchip 50 über den **Statorchip** 30 mit dem Probengemisch befüllt wird, bleiben die Trennkammern 56 zunächst aufgrund der verengten Öffnungen der Trennkammern 56 zum mikrofluidischen Kanal 53 aufgrund bestehender Oberflächenspannungen der Probenflüssigkeit unbefüllt, d. h. die zu Beginn enthaltende Luft beleibt in den Trennkammern 56. Erst durch die bei der Zentrifugation auf das Probengemisch wirkenden Kräfte werden die schweren Bestandteile des Probengemischs in die Trennkammern 56 gepresst und zumindest Teile der darin enthaltenen Luft gelangen in den mikrofluidischen Kanal 53. Bei der Entleerung des mikrofluidischen Kanals 53 verbleiben die in den Trennkammern 56 enthaltenen Teile des Probengemischs im Rotorchip 50. Durch die verengten Verbindungen der Trennkammern 56 zum mikrofluidischen Kanal 53 ist die Gefahr der Mitentnahme unerwünschter Bestandteile des Probengemischs verringert.

Anschließend wird die Druckplatte 65 der Kopplungseinrichtung 60 in die in Fig. 5 gezeigte Stellung bewegt, wodurch, verursacht durch die Federkraft 44, der Motor 42 und der Rotorchip 50 angehoben werden. Nunmehr wird die Antriebseinrichtung 40 aktiviert und der Rotorchip 50 um die in Fig. 1 gezeigte Drehachse D in Drehbewegung versetzt. Infolge der durch die Drehbewegung verursachten Zentrifugalkräfte sammelt sich das Zentrifugat in den Trennkammern 56 des Rotorchips 50 an. Nach Beendigung des Trennprozesses wird die Druckplatte 65 der Kopplungseinrichtungn 60 wieder in Richtung Bodenplatte 21 bewegt, wodurch die Antriebseinrichtung 40 und der Rotorchip 50 nach unten bewegt wird, so dass der Rotorchip 50 in der Endposition der Grundplatte 65 wiederum an den Statorchip 120 angedrückt wird, so dass sich eine fluidische Verbindung zwischen dem Rotorchip 50 und dem Statorchip 120 bildet. Nunmehr wird die der Öffnung 126 zugeordnete Pumpe aktiviert, um den sich im mikrofluidischen Kanal 52 enthaltenen Überstand vollständig aus dem Rotorchip 50 zu entnehmen und gegebenenfalls einem separaten Funktionsmodul zuzuführen.

Anschließend wird die Kopplungseinrichtung 60 vom Rahmen 20 gelöst, so dass der Statorchip 30 und der Rotorchip 50, welche als Einwegchips ausgebildet sind, entfernt und entsorgt werden können. Nunmehr steht das Zentrifugenmodul 10 für einen weiteren Trennvorgang bereit, indem wiederum ein geeigneter Statorchip an der Halteeinrichtung 23 des Rahmens 20 befestigt wird und ein dazu angepasster Rotorchip auf die Halteeinrichtung 41 der Antriebsachse der Antriebseinrichtung 40 gesetzt wird.

## Patentansprüche

1. Mikrofluidische Anordnung zum Trennen von Stoffgemischen durch Zentrifugalkräfte mit einem in Drehbewegung versetzbaren Rotorchip (50; 90; 100; 110; 140), welcher wenigstens einen mikrofluidischen Kanal (53; 91-93; 102, 105; 112), wenigstens eine mikrofluidische Trennkammer (56; 94, 95; 104; 114) und wenigstens eine erste mit dem mikrofluidischen Kanal (53; 91-93; 102, 105; 112) verbundene Öffnung (54, 55; 96; 103, 106; 113, 115) zum Befüllen und/oder Entleeren des Rotorchips (50; 90; 100; 110; 140) enthält,
einem **Statorchip** (30; 130), der wenigstens einen mikrotluidischen Kanal (121; 124; 131-134) und wenigstens eine erste Öffnung (123, 15; 139a-139d) zum Befüllen und/oder Entleeren des Rotorchips (50; 90; 100; 110; 140) aufweist,
wobei der Rotorchip (50; 90; 100; 110; 140) einen zentral liegenden Drehpunkt und eine in der Mitte des Rotorchips befindliche Öffnung aufweist, durch welche die Antriebsachse einer Antriebseinrichtung (40) zum Rotieren des Rotorchips (50; 90; 100; 110; 140) durchführbar ist,
und mit
einer Kopplungseinrichtung (60) zum Heranführen des Rotorchips (50; 90; 100; 110; 140) an den Statorchip (30; 130), um zwischen dem Rotorchip (50; 90; 100; 110; 140) und dem **Statorchip** (30; 130) eine fluidische Verbindung herzustellen, derart, dass das Befüllen und/oder Entleeren des Rotorchips (50; 90; 100; 110; 140) über den Statorchip (30; 130) erfolgt, sowie zum Lösen der fluidischen Verbindung, so dass der Rotorchip (50; 90; 100; 110; 140) in Drehbewegung versetzbar ist.

2. Mikrofluidische Anordnung nach Anspruch 1, **dadurch gekennzeichnet, dass** die mikrotluidischen Kanäle (53; 91-93; 102, 105; 112) und/oder Trennkammern im **Rotorchip** (50; 90; 100; 110; 140) zur Aufnahme von Stoffgemischmengen bis zu einem Milliliter dimensioniert sind.

3. Mikrofluidische Anordnung nach Anspruch 1 oder 2, **dadurch gekennzeichnet, dass** die ersten Öffnungen im Rotor- und **Statorchip** zum Befüllen des Rotorchips (50; 90; 100; 110; 140) vorgesehen sind, und dass zweite Öffnungen im Rotor- und **Statorchip** zum Entleeren des Rotorchips (50; 90; 100; 110; 140) vorgesehen sind.

4. Mikrofluidische Anordnung nach einem der vorhergehenden Ansprüche, **dadurch gekennzeichnet, dass** der Rotorchip (140) wenigstens eine mikrofluidische Trennkammer (146) aufweist, die mit. Einem mikrofluidischen Kanal (143) verbunden ist.

5. Mikrofluidische Anordnung nach Anspruch 4, **dadurch gekennzeichnet, dass** mindestens eine mikrotluidische Trennkammer (146) in Form mehrerer, in etwa fingerförmig angeordneter, vom mikrofluidischen Kanal (143) ausgehender, vom Drehpunkt (142) gesehen radial nach Außen gerichteter, einzelner Kanäle (146a) ausgebildet ist.

6. Mikrofluidische Anordnung nach Anspruch 4 oder 5, **dadurch gekennzeichnet, dass** die einzelnen, die mikrofluidische Trennkammer (146) bildenden Kanäle (146a) einen kleineren Kanalquerschnitt haben als der mikrofluidische Kanal (143) und/oder dass der mikrotluidische Kanal (143) sich im Wesentlichen symmetrisch um einen zentral liegenden Drehpunkt (142) erstreckt.

7. Mikrofluidische Anordnung nach einem der vorhergehenden Ansprüche **dadurch gekennzeichnet, dass** vom mikrofluidische Kanal (143) des Rotorchips (140) in wenigstens einem Bereich (147) vorzugsweise strahlenförmig angeordnete Kanäle oder auch Kammern (148) ausgehen, die einen geringeren Abstand vom Drehpunkt (142) als die mikrofluidische Trennkammer (146) und/oder der mikrofluidische Kanal (143) haben.

8. Mikrofluidische Anordnung nach einem der vorhergehenden Ansprüche, **dadurch gekennzeichnet, dass** der Rotorchip (110) zwei getrennte mikrotluidische (112, 114) Kanäle aufweist, die in einem vorbestimmten Bereich durch eine für Flüssigkeiten und/oder Gase durchlässige Wand (116) verbunden sind.

9. Mikrofluidische Anordnung nach einem der vorhergehenden Ansprüche, **dadurch gekennzeichnet, dass** der wenigstens eine mikrofluidische Kanal 102) und/oder die Trennkammer des Rotorchips (100) mit einem weiteren mikrotluidischen Kanal (107) zur teilweisen Entleerung verbunden ist.

10. Mikrefluidische Anordnung nach einem der vorhergehenden Ansprüche, **dadurch gekennzeichnet, dass** der Statorchip (30; 130) dritte Öffnungen (122, 124; 135a-135d) aufweist, an die eine Aktuatorik und/oder wenigstens eine Pumpe ankoppelbar sind.

11. Mikrofluidische Anordnung nach Anspruch 10, **dadurch gekennzeichnet, dass** im **Statorchip** (30; 130) wenigstens ein mikrotluidischer Kanal (121, 124; 131-134) ausgebildet ist, der mit der ersten, zweiten und/oder dritten Öffnung verbunden ist.

12. Mikrofluidische Anordnung nach einem der vorhergehenden Ansprüche, **gekennzeichnet durch** eine Antriebseinrichtung (40) zum Antreiben des **Rotorchips** (50; 90; 100; 110; 140).

13. Betreibereinrichtung zum Betreiben einer mikrofluidische Anordnung nach einem der Ansprüche, 1 bis 12, **gekennzeichnet durch**
eine Antricbscinrichtung (40) zum Antreiben eines Rotorchips (50; 90; 100; 110; 140), wobei die Antriebseinrichtung eine Antriebsachse aufweist, die **durch** eine in der Mitte eines Rotorchips befindliche Öffnung führbar ist,
und eine Kopplungseinrichtung (60) zum Heranführen des **Rotorchips** (50; 90; 100; 110; 140) an einen Statorchip (30; 130), um zwischen dem **Rotorchips** (50; 90; 100; 110; 140) und dem Statorchip (30; 130) eine fluidische Verbindung herzustellen. derart, dass das Befüllen und/oder Entleeren des Rotorchips (50; 90: 100; 110; 140) über den Statorchip (30; 130) erfolgt, sowie zum Lösen der fluidischen Verbindung, so dass der Rotorchip (50; 90; 100; 110; 140) in Drehbewegung versetzbar ist.

14. Betreibereinrichtung nach Anspruch 13, **dadurch gekennzeichnet, dass** eine Halteeinrichtung zur Aufnahme des Statorchips (23) vorgesehen ist, der Rotorchip oberhalb oder unterhalb des Statorchips angeordnet ist, die Antriebseinrichtung eine Antriebsachse aufweist, die den Rotorchip halten kann, wobei im Rotationsbetrieb der Rotorchip im Abstand zum Statorchip angeordnet ist, und dass die Kopplungseinrichtung eine Einrichtung (65) zum Heranführen des **Rotorchips** im Ruhezustand an den Statorchip aufweist, um zwischen dem Rotorchip und dem Statorchip eine fluidische Verbindung zum Befüllen und Entleeren des **Rotorchips** herzustellen.

15. Betreibereinrichtung nach Anspruch 13 oder 14, **gekennzeichnet durch** Vorratsbehälter zum Aufbewahren von Rotorchips und Statorchips und/oder Vorratsbehälter für die zu verwendenden Chemikalien, und/oder eine Einrichtung zum automatisierten Zuführen und Entfernen eines Rotor- und/oder Statorchips zur bzw. von der Betreibereinrichtung.

## Claims

1. Microfluidic arrangement for separating substance mixtures by centrifugal forces, with a rotor chip (50; 90; 100; 110; 140) which is movable in a rotating motion and which contains at least one microfluidic channel (53; 91-93; 102, 105; 112), at least one microfluidic separating chamber (56; 94, 95; 104; 114) and at least one first opening (54, 55; 96; 103, 106; 113, 115) connected to the microfluidic channel (53; 91-93; 102, 105; 112) for filling and/or emptying the rotor chip (50; 90; 100; 110; 140), and with a stator chip (30; 130) which has at least one microfluidic channel (121; 124; 131-134) and at least one first opening (123, 15; 139a-139d) for filling and/or emptying the rotor chip (50; 90; 100; 110; 140), wherein the rotor chip (50; 90; 100; 110; 140) has a centrally located rotation point and an opening which is located in the middle of the rotor chip and through which the drive shaft of a drive device (40) for rotating the rotor chip (50; 90; 100; 110; 140) can be guided, and with a coupling device (60) for guiding the rotor chip (50; 90; 100; 110; 140) to the stator chip (30; 130) in order to produce a fluidic connection between the rotor chip (50; 90; 100; 110; 140) and the stator chip (30; 130), in such a way that the filling and/or emptying of the rotor chip (50; 90; 100; 110; 140) takes place via the stator chip (30; 130), and for releasing the fluidic connection such that the rotor chip (50; 90; 100; 110; 140) is movable in a rotating motion.

2. Microfluidic arrangement according to Claim 1, **characterized in that** the microfluidic channels (53; 91-93; 102, 105; 112) and/or separating chambers in the rotor chip (50; 90; 100; 110; 140) are dimensioned to receive quantities of substance mixture of up to one millilitre.

3. Microfluidic arrangement according to Claim 1 or 2, **characterized in that** the first openings in the rotor chip and stator chip are provided for filling the rotor chip (50; 90; 100; 110; 140), and **in that** second openings in the rotor chip and stator chip are provided for emptying the rotor chip (50; 90; 100; 110; 140).

4. Microfluidic arrangement according to one of the preceding claims, **characterized in that** the rotor chip (140) has at least one microfluidic separating chamber (146) which is connected to a microfluidic channel (143).

5. Microfluidic arrangement according to Claim 4, **characterized in that** at least one microfluidic separating chamber (146) is designed in the form of a plurality of individual channels (146a) which, for example arranged in the form of fingers and issuing from the microfluidic channel (143), are directed radially outwards as seen from the rotation point (142).

6. Microfluidic arrangement according to Claim 4 or 5, **characterized in that** the individual channels (146a) forming the microfluidic separating chamber (146) have a smaller channel cross section than the microfluidic channel (143), and/or **in that** the microfluidic channel (143) extends substantially symmetrically about a centrally located rotation point (142).

7. Microfluidic arrangement according to one of the preceding claims, **characterized in that** channels, preferably arranged in a ray shape, or else chambers (148) issue from the microfluidic channel (143) of the rotor chip (140) in at least one area (147) and are at a shorter distance from the rotation point (142) than the microfluidic separating chamber (146) and/or the microfluidic channel (143).

8. Microfluidic arrangement according to one of the preceding claims, **characterized in that** the rotor chip (110) has two separate microfluidic channels (112, 114) which, in a predetermined area, are connected by a wall (116) that is permeable to liquids and/or gases.

9. Microfluidic arrangement according to one of the preceding claims, **characterized in that** the at least one microfluidic channel (102) and/or the separating chamber of the rotor chip (100) is connected to a further microfluidic channel (107) for partial emptying.

10. Microfluidic arrangement according to one of the preceding claims, **characterized in that** the stator chip (30; 130) has third openings (122, 124; 135a-135d), to which an actuator and/or at least one pump can be coupled.

11. Microfluidic arrangement according to Claim 10, **characterized in that**, in the stator chip (30; 130), at least one microfluidic channel (121, 124; 131-134) is formed which is connected to the first, second and/or third opening.

12. Microfluidic arrangement according to one of the preceding claims, **characterized by** a drive device (40) for driving the rotor chip (50; 90; 100; 110; 140).

13. Operator device for operating a microfluidic arrangement according to one of Claims 1 to 12, **characterized by** a drive device (40) for driving a rotor chip (50; 90; 100; 110; 140), which drive device has a drive shaft that can be guided through an opening located in the middle of a rotor chip, and by a coupling device (60) for guiding the rotor chip (50; 90; 100; 110; 140) to a stator chip (30; 130) in order to produce a fluidic connection between the rotor chip (50; 90; 100; 110; 140) and the stator chip (30; 130), in such a way that the filling and/or emptying of the rotor chip (50; 90; 100; 110; 140) takes place via the stator chip (30; 130), and for releasing the fluidic connection such that the rotor chip (50; 90; 100; 110; 140) is movable in a rotating motion.

14. Operator device according to Claim 13, **characterized in that** a holding device is provided for receiving the stator chip (23), the rotor chip is arranged above or below the stator chip, and the drive device has a drive shaft that can hold the rotor chip, the rotor chip being arranged at a distance from the stator chip in rotational operation, and **in that** the coupling device has a device (65) for guiding the rotor chip in the rest state to the stator chip, in order to produce a fluidic connection between the rotor chip and the stator chip for the purpose of filling and emptying the rotor chip.

15. Operator device according to Claim 13 or 14, **characterized by** storage containers for storing rotor chips and stator chips and/or storage containers for the chemicals that are to be used, and/or a device for automated delivery and removal of a rotor chip and/or stator chip to/from the operator device.

## Revendications

1. Système microfluide destiné à séparer des mélanges de matières par des forces centrifuges et présentant
une puce de rotor (50; 90; 100; 110; 140) qui peut être amenée à se déplacer en rotation et qui contient au moins un canal microfluide (53; 91-93; 102, 105; 112),
au moins une chambre microfluide de séparation (56; 94, 95; 104; 114) et au moins une première ouverture (54, 55; 93; 103, 106; 113, 115) reliée au canal microfluide (53; 91-93; 102, 105; 112) pour remplir et/ou vider la puce de rotor (50; 90; 100; 110; 140),
une puce de stator (30; 130) qui présente au moins un canal microfluide (121; 124; 131-134) et au moins une première ouverture (123, 15; 139a-139d) qui permet de remplir et/ou de vider la puce de rotor (50; 90; 100; 110; 140),
la puce de rotor (50; 90; 100; 110; 140) présentant un point de rotation situé au centre et une ouverture située au milieu de la puce de rotor et par laquelle l'axe d'entraînement d'un dispositif d'entraînement (40) destiné à faire tourner la puce de rotor (50; 90; 100; 110; 140) peut passer, et
un dispositif d'accouplement (60) qui amène la puce de rotor (50; 90; 100; 110; 140) contre la puce de stator (30; 130) pour établir entre la puce de rotor (50; 90; 100; 110; 140) et la puce de stator (30; 130) une liaison à écoulement de telle sorte qu'ait lieu le remplissage et/ou la vidange de la puce de rotor (50; 90; 100; 110; 140) par l'intermédiaire de la puce de stator (30; 130) et pour libérer la liaison d'écoulement de telle sorte que la puce de rotor (50; 90; 100; 110; 140) puisse être amenée en rotation.

2. Système microfluide selon la revendication 1, **caractérisé en ce que** les canaux microfluides (53; 91-93; 102, 105; 112) et/ou les chambres de séparation prévues dans la puce de rotor (50; 90; 100; 110; 140) sont dimensionnés de manière à reprendre des mélanges de matière qui représentent jusqu'à un millilitre.

3. Système microfluide selon les revendications 1 ou 2, **caractérisé en ce que** les premières ouvertures sont prévues dans la puce de rotor et la puce de stator pour remplir la puce de rotor (50; 90; 100; 110; 140) et **en ce que** les deuxièmes ouvertures sont prévues dans la puce de rotor et la puce de stator pour vider la puce de rotor (50; 90; 100; 110; 140).

4. Système microfluide selon l'une des revendications précédentes, **caractérisé en ce que** la puce de rotor (140) présente au moins une chambre microfluide de séparation (146) reliée au canal microfluide (143).

5. Système microfluide selon la revendication 4, **caractérisé en ce qu'**au moins une chambre microfluide de séparation (146) est configurée sous la forme de plusieurs canaux distincts (146a) disposés en doigts, partant du canal microfluide (143) et orientés radialement vers l'extérieur depuis le point de rotation (142).

6. Système microfluide selon les revendications 4 ou 5, **caractérisé en ce que** les différents canaux (146a) qui forment la chambre microfluide de séparation (146) ont une section transversale plus petite que celle du canal microfluide (143) et/ou **en ce que** le canal microfluide (143) s'étend essentiellement symétriquement autour d'un point de rotation (142) situé au centre.

7. Système microfluide selon l'une des revendications précédentes, **caractérisé en ce que** des canaux ou également des chambres (148) qui présentent par rapport au point de rotation (142) une plus petite distance que la chambre microfluide de séparation (146) et/ou que le canal microfluide (143) partent du canal microfluide (143) de la puce de rotor (140) dans au moins une zone (147), les canaux étant de préférence disposés en rayons.

8. Système microfluide selon l'une des revendications précédentes, **caractérisé en ce que** la puce de rotor (110) présente deux canaux microfluides (112, 114) distincts qui sont reliés dans une partie prédéterminée par une paroi (116) perméable aux liquides et/ou aux gaz.

9. Système microfluide selon l'une des revendications précédentes, **caractérisé en ce que** le ou les canaux microfluides (102) et/ou la ou les chambres de séparation de la puce de rotor (100) sont reliés à un autre canal microfluide (107) qui permet une vidange partielle.

10. Système microfluide selon l'une des revendications précédentes, **caractérisé en ce que** la puce de stator (30; 130) présente des troisièmes ouvertures (122, 124; 135a-135d) auxquelles un ensemble d'actionneur et/ou au moins une pompe peuvent être raccordés.

11. Système microfluide selon la revendication 10, **caractérisé en ce qu'**au moins un canal microfluide (121, 124; 131-134) relié à la première, à la deuxième et/ou à la troisième ouverture est formé dans la puce de stator (30; 130).

12. Système microfluide selon l'une des revendications précédentes, **caractérisé par** un dispositif d'entraînement (40) qui entraîne la puce de rotor (50; 90; 100; 110; 140).

13. Dispositif de conduite destiné à conduire un système microfluide selon l'une des revendications 1 à 12,
**caractérisé par**
un dispositif d'entraînement (40) qui entraîne un puce de rotor (50; 90; 100; 110; 140), le dispositif d'entraînement présentant un axe d'entraînement qui peut passer dans une ouverture située au milieu d'une puce de rotor,
un dispositif de couplage (60) qui permet d'amener la puce de rotor (50; 90; 100; 110; 140) sur une puce de stator (30; 130) pour établir entre la puce de rotor (50; 90; 100; 110; 140) et la puce de stator (30; 130) une liaison à écoulement de manière à réaliser le remplissage et/ou la vidange de la puce de rotor (50; 90; 100; 110; 140) par l'intermédiaire de la puce de stator (30; 130) et pour libérer la liaison à écoulement de telle sorte que la puce de rotor (50; 90; 100; 110; 140) puisse être amenée à se déplacer en rotation.

14. Dispositif de conduite selon la revendication 13, **caractérisé en ce qu'**un dispositif de maintien est prévu pour reprendre la puce de stator (23), **en ce que** la puce de rotor est disposée au-dessus ou en dessous de la puce de stator,
**en ce que** le dispositif d'entraînement présente un axe d'entraînement qui peut tenir la puce de rotor, la puce de rotor étant disposée à distance de la puce de stator lorsqu'elle est en rotation et
**en ce que** le dispositif de couplage présente un dispositif (65) qui amène la puce de rotor en position de repos contre la puce de stator pour établir entre la puce de rotor et la puce de stator une liaison à écoulement qui permet de remplir et de vider la puce de rotor.

15. Dispositif de conduite selon les revendications 13 ou 14, **caractérisé par** des récipients de réserve qui permettent de conserver la puce de rotor et la puce de stator et/ou des récipients de réserve pour les produits chimiques à utiliser et/ou par un dispositif qui amène et éloigne automatiquement une puce de rotor et/ou une puce de stator vers ou depuis le dispositif de conduite.
